# EUROPEAN PATENT SPECIFICATION

(11) **EP 3 434 056 B1**
(45) Date of publication and mention of the grant of the patent: **18.11.2020**
(21) Application number: 16895702.5
(22) Date of filing: 07.07.2016
(51) Int. Cl.: H04W 28/02, H04W 28/16, H04B 7/26, H04W 72/12, H04W 88/12, H04W 92/12

(54) **METHOD, APPARATUS AND SYSTEM OF SPLITTING CONTROL PLANE AND USER PLANE FOR MEDIA ACCESS CONTROL IN A RADIO ACCESS NETWORK**
VERFAHREN, VORRICHTUNG UND SYSTEM ZUR AUFTEILUNG VON STEUERUNGSEBENE UND NUTZEREBENE ZUR MEDIUMZUGRIFFSSTEUERUNG IN EINEM FUNKZUGRIFFSNETZWERK
PROCÉDÉ, APPAREIL ET SYSTÈME DE DIVISION D'UN PLAN DE COMMANDE ET D'UN PLAN D'UTILISATEUR SERVANT À UN CONTRÔLE D'ACCÈS AU SUPPORT DANS UN RÉSEAU D'ACCÈS RADIO

(30) Priority: 25.03.2016 US 201662313610 P
(43) Date of publication of application: 30.01.2019
(73) Proprietor: Intel Corporation, Santa Clara, CA 95054 (US)
(72) Inventor: YANG, Feng, Beijing 100096 (CN); HUANG, Min, Beijing 100025 (CN); ZHANG, Xu, Beijing 100197 (CN); SIROTKIN, Alexander, 90901 Giv'on Hachadasha (IL)
(74) Representative: Goddar, Heinz J.
(86) International application number: PCT/US2016/041387
(87) International publication number: WO 2017/164907

(56) References cited:
- EP-A1- 2 770 658
- WO-A1-2014/116156
- US-A1- 2011 235 528
- US-A1- 2012 281 564
- US-A1- 2014 211 652
- US-A1- 2015 208 366
- US-A1- 2015 296 390
- '3GPP; TSGRAN; UTRAN Iub interface: general aspects and principles (Release 13' 3GPP TS 25.430 V13.0.0 18 December 2015, XP051294692

## Description

### Field

Embodiments of the present application relate generally to the field of wireless communications, and more particularly, to methods, apparatuses and systems of splitting control plane and user plane for media access control in a radio access network

### Background Information

Radio access network (RAN) re-architectures may be considered in order to meet challenges brought by 5^{th} generation wireless systems. Cloud RAN may centralize the baseband unit (BBU) of base stations (BS) in a central office while providing a performance gain due to the capability of enabling advanced inter-cell coordination algorithms, such as coordinated multi-point (CoMP) joint transmission (JT), and joint reception (JR). Stanford proposed SoftRAN to centralize the control plane of underlying BSs from radio resource control (RRC), radio resource management (RRM) down to physical layer (PHY), in a software defined central controller which may own a global view of users and radio resources.

US 2011/0235528 A1 relates to fair congestion detection for transport network layer WCDMA communications. Congestion is detected in a radio access transport network including one or more radio network controllers each coupled to one or more radio base stations. Multiple data packet flows are each associated with a mobile radio terminal communication, and each flow is controlled in the radio access transport network by a corresponding flow control entity. They are monitored for congestion in the transport network. If a congestion area in the transport network is detected for one of the monitored data packet flows, then a determination is made whether other monitored data packet flows share the detected congestion area. Congestion notification information is communicated to the flow control entities corresponding to the other monitored data packet flows that share the detected congestion area. Based on the congestion notification information, the informed flow control entities may take a flow control action, e.g., to enable fair sharing of communications resources in the transport network.

WO2014/116156 A1 discloses a method in a User Equipment, UE, for enabling interception, decoding and/or processing of at least parts of a Media Access Control, MAC, level message. The method comprises the steps of receiving configuration information comprising information to add additional information to a MAC level message, and creating a bit string representing the additional information. The method also comprise the step of adding the created bit string to the MAC level message, to enable a recipient of said MAC level message to determine, based on the additional information represented by the bit string, whether at least part of a payload of the MAC level message is to be intercepted, decoded and/or processed. There is further disclosed a method in a base station for decoding a corresponding MAC level message. A corresponding User Equipment, UE, and a base station configured for the methods are also disclosed.

### Summary

The object of the present application is solved by the independent claims. Advantageous embodiments are described by the dependent claims.

### Brief Description of the Drawings

Embodiments of the present application are illustrated by way of example, and not by way of limitation, in the figures of the accompanying drawings in which like reference numerals refer to similar elements.
**Figure 1** schematically illustrates a radio access network (RAN) architecture, in accordance with various embodiments.
**Figure 2** schematically illustrates a wireless system having a base station (e.g., evolved Node B (eNB)) and a RAN controller for splitting media access control (MAC) control plane and user plane, in accordance with various embodiments.
**Figure 3** schematically illustrates a method of splitting MAC control plane and user plane by the RAN controller, in accordance with various embodiments.
**Figure 4** schematically illustrates a method of splitting MAC control plane and user plane by the base station (e.g., eNB), in accordance with various embodiments.
**Figure 5** schematically illustrates an example system in accordance with various embodiments.
**Figure 6** schematically illustrates an example of the UE device, in accordance with various embodiments.

### Description of the Embodiments

Illustrative embodiments of the present disclosure include, but are not limited to, methods, systems, and apparatuses of splitting the control plane and user plane for media access control in a radio access network (RAN), e.g., in compliance with the 5^{th} generation communication technologies.

Various aspects of the illustrative embodiments will be described using terms commonly employed by those skilled in the art to convey the substance of their work to others skilled in the art. However, it will be apparent to those skilled in the art that some alternate embodiments may be practiced using portions of the described aspects. For purposes of explanation, specific numbers, materials, and configurations are set forth in order to provide a thorough understanding of the illustrative embodiments. However, it will be apparent to one skilled in the art that alternate embodiments may be practiced without the specific details. In other instances, well-known features are omitted or simplified in order to not obscure the illustrative embodiments.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

As used herein, the term "module" may refer to, be part of, or include an Application Specific Integrated Circuit (ASIC), an electronic circuit, a processor (shared, dedicated, or group) and/or memory (shared, dedicated, or group) that execute one or more software or firmware programs, a combinational logic circuit, and/or other suitable components that provide the described functionality.

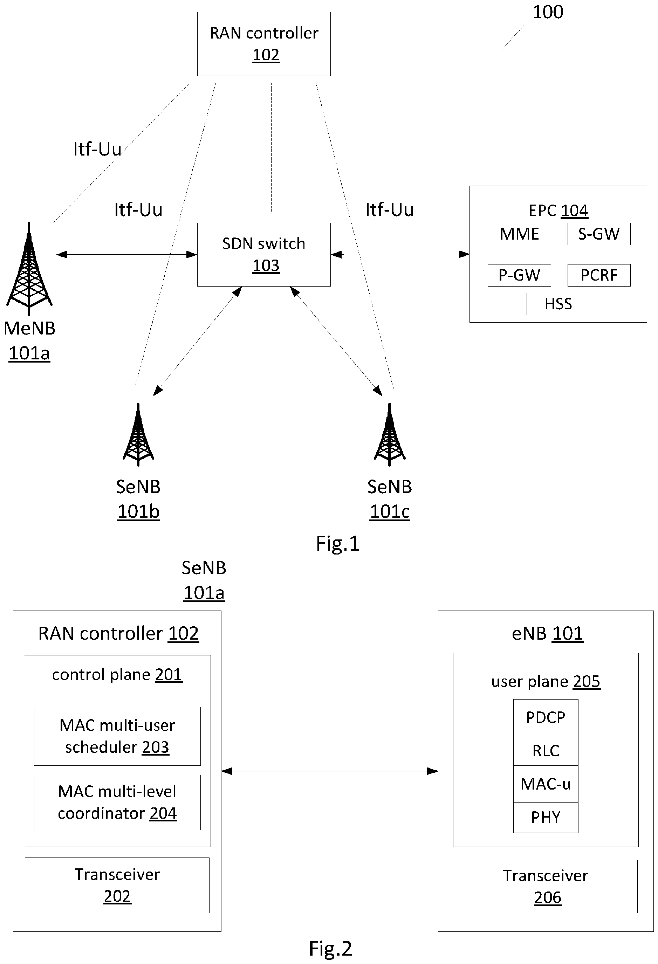

Figure 1 schematically illustrates a radio access network (RAN) architecture 100, in accordance with various embodiments. As illustrated in Figure 1, the RAN architecture may comprise a plurality of evolved Node B (eNB) 101a-c, RAN controller 102, a software defined network (SDN) switch 103, an evolved packet core (EPC) 104, and/or others. The eNB 101a-c may comprise a macro eNB 101a covering a macro cell and one or more small eNBs 101b-c covering small cells. The eNBs 101 may perform MAC layer user plane (UP) functionalities, including but not limited to generating a MAC UP message that may be associated with a MAC protocol data unit (PDU) to be transferred between the eNB 101 and a user equipment (UE) (not shown in Figure 1), with a channel condition between the eNB 101 and the UE, and/or with others; transmitting a MAC UP message to the RAN controller 102 via an interface, i.e., interface Universal Mobile Telecommunications System Terrestrial Radio Access Network (UTRAN) UE (itf-Uu); receiving a MAC control plane (CP) message from the RAN controller 102 via the itf-Uu, wherein information elements (IEs) included in the MAC CP MESSAGE may be associated with MAC layer multi-user scheduling and/or MAC layer multi-cell coordination; encapsulating/decapsulating the MAC PDU, based at least in part on the message received form the RAN controller (e.g., the MAC CP MESSAGE); transmitting/receiving the MAC PDU to/from the UE, based at least in part on the MAC CP MESSAGE; and/or other functionalities. It should be understood that the above functionalities may be listed without any limitations to the order. For example, eNB 101 may receive a MAC CP message indicating control frame format, based on which the MAC UP MESSAGE may be generated. In this way, the RAN control 102 may control the MAC scheduling with a plurality of eNBs through utilizing a uniformed format.

In some embodiments, RAN controller 102 may perform MAC CP functionalities, including, but not limited to, performing multi-user multi-flow scheduling and coordinating interference with neighbor cells; receiving, from the eNB 101, a MAC UP message via the itf-Uu, wherein the MAC UP message may be associated with the MAC PDU to be transferred between the eNB 101 and the UE, with the channel condition between the eNB 101 and the UE, and/or with others; generating a MAC CP message, based at least in part on the MAC UP message received form the eNB wherein the MAC CP message may be associated with MAC layer multi-user scheduling and/or MAC layer multi-cell coordination; transmitting the MAC CP message to the eNB 101 via the itf-Uu, and/or others. The MAC CP message associated with the MAC layer multi-user scheduling may be further associated with an indication of the UE to be scheduled in a current frame; a radio resource assignment for the UE; a link level parameter for the UE such as modulation/demodulation parameter, coding/decoding parameter, etc.; and/or others. The MAC CP message associated with the MAC layer multi-cell coordination is further associated with determination of a cell to provide a service; coordinated multi-point (CoMP) transmission/reception for the cell; and/or a carrier that the cell uses for the transmission/reception.

Examples of messages communicated between eNB 101 and RAN controller 1 02 via itf-Uu may be provided in the following tables:

**Table 1 exemplary definition of messages for Itf-Uu**

| **Message name** | **Direction** | **Main fields included** |
|---|---|---|
| SF (subframe) assembly | C-plane -> U-plane | IE1 - Control format indicator, IE2 - PUSCH (physical uplink shared channel) grant, IE3 - TPC (transmission power control), IE4 - PDSCH (physical downlink shared channel) assignment, IE5 - RAR/PCCH/BCCH (a random access response/paging control channel/broadcast control channel) transfer |
| CSI (channel state information) report | U-plane -> C-plane | IE6 - DL CQI/PMI/RI (downlink channel quality indicator/precoding matrix indicator/rank indication), UL SRS (uplink sounding reference signal) measurement, IE7 -interference over thermal (IOT) |
| MAC CE (control element) direct transfer | U-plane -> C-plane | IE8 - buffer state report (BSR), power headroom report (PH), C-RNTI (cell-radio network temporary identifier) from UE |
| ACK&NACK (acknowledgement/non-acknowledgement) report | U-plane -> C-plane | IE9 - ACK/NACK for both downlink and uplink transmission |
| PRACH (physical random access channel) report | U-plane -> C-plane | IE10 - index and position of detected preambles |
| DL BSR (downlink buffer state report) | U-plane -> C-plane | IE11 - Downlink buffer state |

The SF assembly may represent MAC UP IEs to be transmitted from the CP of RAN controller 102 to the UP of eNB 101, while the CSI report, MAC CE direct transfer, ACK&NACK report, PRACH report and DLBSR may represent MAC UP MESSAGEs to be transmitted from the UP of eNB 101 to the CP of RAN controller 102. There may be no limitation of transmission order for the MAC DP IEs and MAC UP MESSAGES. Further, there may be no limitation of transmission order for individual IEs of MAC DP IEs.

An exemplary definition of information element (IE) 1- 11 can be as follows:
• IE1 - Control format indicator
This may be used by the eNB 101 for configuring physical downlink control channel (PDCCH) for a particular downlink subframe.

| **IE Name** | **Presence** | **IE type and reference** | **Semantics description** |
|---|---|---|---|
| CFI | M | INTEGER (1,2,3) | Indication of the number of OFDM symbols used for DCI (downlink control indicator) |

• IE2 - PUSCH grant
This may contain grant information of uplink shared channel, and may be used by the eNB 101 for reception of MAC PDUs from the UE.

| **IE Name** | **Presen ce** | **IE type and reference** | **Semantics description** |
|---|---|---|---|
| UE Identity | M | BIT STRING | |
| DCI payload | O | OCTET STRING | Mandatory for serving cell |
| CCE (control channel element) info. | O | | |
| > AL | M | | Aggregation level i.e. the number of CCEs |
| > Position | M | | |
| Resource block assignment | M | BIT STRING | |
| MCS | M | INTEGER | Modulation and coding scheme |
| CoMP JR (coordinated multi-point joint reception) info. | O | | |
| > JR serving cell | M | | |
| >Recv algorithm | M | ENUMERATED (mrc, irc) | Algorithms for JR including maximum ratio combining (MRC) and interference rejection combining (IRC) |

• **IE3** - **TPC**
This may contain TPC commands for PUCCH and PUSCH

| **Name** | **Presence** | **IE type and reference** | **Semantics description** |
|---|---|---|---|
| TPC-RNTI | M | BIT STRING | RNTI to scramble DCI format 3 and 3A designed for transmission power control of PUCCH (physical uplink control channel) and PUSCH. Configured by eNB via RRC signaling. |
| DCI payload | M | OCTET STRING | Comprised by TPC commands. |
| CCE info. | M | | |
| > AL | M | INTEGER | |
| > Position | M | INTEGER | |

• **IE4 - PDSCH assignment**
This may contain assignment information of physical downlink shared channel (PDSCH) and may be used by the eNB 101 to encapsulate MAC PDU and transmit the MAC PDU to the UE.

| **IE Name** | **Presence** | **Range** | **IE type and reference** | **Semantics description** |
|---|---|---|---|---|
| UE Identity | M | | BIT STRING | |
| HAQR (hybrid automatic repeat request) No. | M | | INTEGER | |
| DCI payload | M | | OCTET STRING | |
| CCE info. | M | | | |
| > AL | M | | | |
| > Position | M | | | |
| MAC CE List | O | | | UE contention resolution identity, Timing advance command, DRX command. |
| > MAC CE item IEs | | 1 to <max> | | |
| >> LCID | M | | INTEGER | Logical channel ID |
| >> MAC CE payload | M | | OCTET STRING | |
| Logical Channel List | O | | | DRBs and SRBs to be transmitted in the subframe. |
| > Logical channel item IEs | | 1 to <max> | | |
| >> LCID | M | | | |
| >> Length | M | | | |
| TB S | M | | INTEGER | Transport block size |
| Resource block assignment | M | | BIT STRING | |
| MCS | M | | INTEGER | |
| NDI | | | | New data indicator |
| RV | M | | | Redundancy version |
| Precoding info. | O | | | |

• **IE5 - RAR/PCCH/BCCH Transfer**
This may contain assignment information of downlink shared channel as well as payload to transfer RAR/PCCH/BCCH.

| **IE Name** | **Presence** | **IE type and reference** | **Semantics description** |
|---|---|---|---|
| RNTI | M | BIT STRING | RA(random access)-RNTI for RAR, P(paging)-RNTI (FFFE) for PCCH and SI(system information)-RNTI (FFFF) for BCCH |
| DCI payload | M | OCTET STRING | Mandatory for serving cell |
| CCE info. | M | | |
| > AL | M | | Aggregation level i.e. the number of CCEs |
| > Position | M | | |
| RAR/Paging/SIB PDU | M | OCTET STRING | Payload of RAR/PCCH/BCCH |
| TBS | M | INTEGER | Transport block size |
| Resource block assignment | M | BIT STRING | |
| MCS | M | INTEGER | |

• **IE6 - Channel measurement results**
This may contain DL and UL channel measurement results based on CRS (cell-specific reference signal) or SRS (sounding reference signal).

| IE Name | Presence | IE type and reference | Semantics description |
|---|---|---|---|
| UE Identity | M | BIT STRING | |
| DL meas. | O | OCTET STRING | Downlink CQI/PMI/RI fed back by UE |
| UL meas. | O | OCTET STRING | Uplink quantized channel coefficients |

• **IE7 - Interference over thermal**
This may indicate interference to a current cell (e.g., interference with respect to a noise floor) caused by the uplink of a UE in a neighboring cell.

| IE Name | Presence | IE type and reference | Semantics description |
|---|---|---|---|
| IOT | M | INTEGER | Uplink interference measured by eNB |

• **IE8- UL MAC CE**
This may contain a MAC control element useful for the eNB 101/RAN controller 102 to acquire the UE's buffer status, power headroom, identity, etc.

| **IE Name** | **Presence** | **Range** | **IE type and reference** | **Semantics description** |
|---|---|---|---|---|
| UE Identity | M | | BIT STRING | |
| MAC CE List | M | | | PH, C-RNTI, BSR |
| > MAC CE item IEs | | 1 to <max> | | |
| >> CE Type | M | | ENUMERATE(b sr, ph, c-rnti) | |
| >> CE Length | M | | INTEGER | |
| >> CE Payload | M | | OCTET STRING | |

• **IE9 - ACK/NACK**
This may be useful for successful/unsuccessful reception indication in the HARQ process.

| **IE Name** | **Presence** | **IE type and reference** | **Semantics description** |
|---|---|---|---|
| UE Identity | M | BIT STRING | |
| DL ACK/NACK item | | | |
| > HARQ No. | | INTEGER | |
| > ACK/NACK | | ENUMERATE (ack, nack) | |
| UL ACK/NACK item | | | |
| > HARQ No. | | INTEGER | |
| > ACK/NACK | | ENUMERATE (ack,nack) | |

• **IE10** - **PRACH**
This may be useful for reporting preambles received in PRACH.

| **IE Name** | **Presence** | **Range** | **IE type and reference** | **Semantics description** |
|---|---|---|---|---|
| Detected preamble list | | | | |
| > Detected preamble item IEs | | 1 to <max> | | |
| >> Ind | | | | |
| ex | | | | |
| >> Position | | | | |

• **IE11 -DL buffer state**
This may be used to report a MAC buffer state about data to be transmitted from eNB 101 to the UE

| **IE Name** | **Presence** | **Range** | **IE type and reference** | **Semantics description** |
|---|---|---|---|---|
| UE Identity | M | | | |
| DL B SR Li st | | 1 to <max> | | |
| > DL BSR Item IEs | | | | |
| >> LCID | | | INTEGER | Logical channel ID |
| >> Buffer size | | | INTEGER | |

In some embodiments, SDN switch 103 may bridge eNB 101a-c and RAN controller 102 with EPC 104 via an interface between eNB and SDN switch, an interface between RAN controller 102 and SDN switch 103, and/or an interface between SDN switch 103 and EPC 104. SDN switch 103 may transfer one or more of the above-stated messages between eNB 101 and RAN controller 102. Moreover, SDN switch 103 may transfer messages including a signaling associated with the addition, modification, or removal of a signaling radio bearer or data radio bearer between the eNB and RAN controller, messages including the addition, modification, or removal of a E-UTRAN radio access bearer (E-RAB) between the RAN controller and EPC, and user data between the eNB and EPC.

In some embodiments, EPC 104 may comprise a mobility management entity, serving gateway (S-GW), PDN gateway (P-GW), Policy and Charging Rules Function, home subscriber server (HSS), and/or others.

It should be understood that other technologies may implement other embodiments for the RAN architecture 100 as illustrated in Figure 1. For example, besides the 5^{th} generation wireless technology, the RAN architecture as illustrated in Figure 1 may use a variety of wireless access technologies such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), and/or others in compliance with an Institute of Electrical and Electronics Engineers (IEEE) 802 system, a 3rd Generation Project Partnership (3GPP) system, a 3GPP Long Term Evolution (LTE) system, and/or a 3GPP2 system.

As another example, besides the MAC control plane functionalities, the RAN controller 102 may further perform other control plane functionalities, such as radio resource control (RRC), radio resource management (RRM), S1-AP (S1 application protocol), X2-AP (X2 application protocol), etc.

Figure 2 schematically illustrates a wireless system 200 for splitting the media access control (MAC) control plane and user plane, in accordance with various embodiments. In some embodiments, the wireless system 200 may comprise RAN controller 102, eNB 101 (e.g., MeNB 101a, SeNB 101b, SeNB 101c, etc.) which may communicate with RAN controller 102 via itf-Uu, and/or others. RAN controller 102 may comprise control plane 201, transceiver 202, and/or others to perform MAC CP functionalities, including but not limited to, receiving from the eNB 101 the MAC UP message via the itf-Uu, wherein the MAC UP message may be associated with the MAC PDU to be transferred between the eNB 101 and the UE, the channel condition between the eNB 101 and the UE, and/or others; generating the MAC CP message, based at least in part on the MAC UP message received from eNB 101, wherein the MAC CP message may be associated with MAC layer multi-user scheduling and/or MAC layer multi-cell coordination; transmitting the MAC CP message to the eNB 101 via the itf-Uu; and/or others.

The control plane 201 may further comprise a MAC multi-user scheduler 203, MAC multi-cell coordinator 204, and/or others. MAC multi-user scheduler 203 may generate the MAC CP message to identify UE(s) to be scheduled in a current subframe; determine radio resources (e.g., frequency domain, time domain) for transceiving the subframe from/to the UE(s); determine link level parameter for the subframe from/to the UE(s) including modulation/demodulation parameter, coding/decoding parameter, etc. MAC multi-cell coordinator 204 may generate the MAC CP message to reduce cell interference; determine which cell(s) serve the UE(s) and their coordination pattern such as a non-serving cell transmitting/receiving PDU(s) to/from the UE(s) via a serving cell, etc.; determine radio resources for the cell(s) to transmit/receive PDUs to/from the UE(s), e.g., the carrier to transmit/receive the PDU.

The eNB 101 may further comprise user plane 205, transceiver 206, and/or others, to perform MAC UP functionalities, in addition to functionalities for the PHY (physical layer), RLC (radio link control), PDCP (packet data convergence protocol), etc. The MAC UP functionalities may include, but are not limited to, generating a MAC UP message that may be associated with the MAC PDU to be transferred between the eNB 101 and the UE (not shown in Figure 1), the channel condition between the eNB 101 and the UE, and/or others; transmitting MAC UP message to the RAN controller 102 via the interface, i.e., itf-Uu; receiving the MAC CP message from the RAN controller 102 via the itf-Uu, wherein the MAC CP message may be associated with MAC layer multi-user scheduling and/or MAC layer multi-cell coordination; encapsulating/decapsulating the MAC PDU, based at least in part on the message received from the RAN controller 102; transmitting/receiving the MAC PDU to/from the UE, based at least in part on the MAC CP message; and/or other functionalities. When the wireless system 200 comprises multiple eNBs, the control plane 201 may comprise a centralized/consolidated C-plane controlling multiple U-plane entities.

It should be understood that the above functionalities may be listed without any limitations to the order. It should also be understood that other technologies may implement other embodiments for the wireless system 200 as illustrated in Figure 2. For example, besides the MAC control plane functionalities, the RAN controller 102 may further perform other control plane functionalities, such as radio resource control (RRC), radio resource management (RRM), S1-AP (S1 application protocol), X2-AP (X2 application protocol), etc.

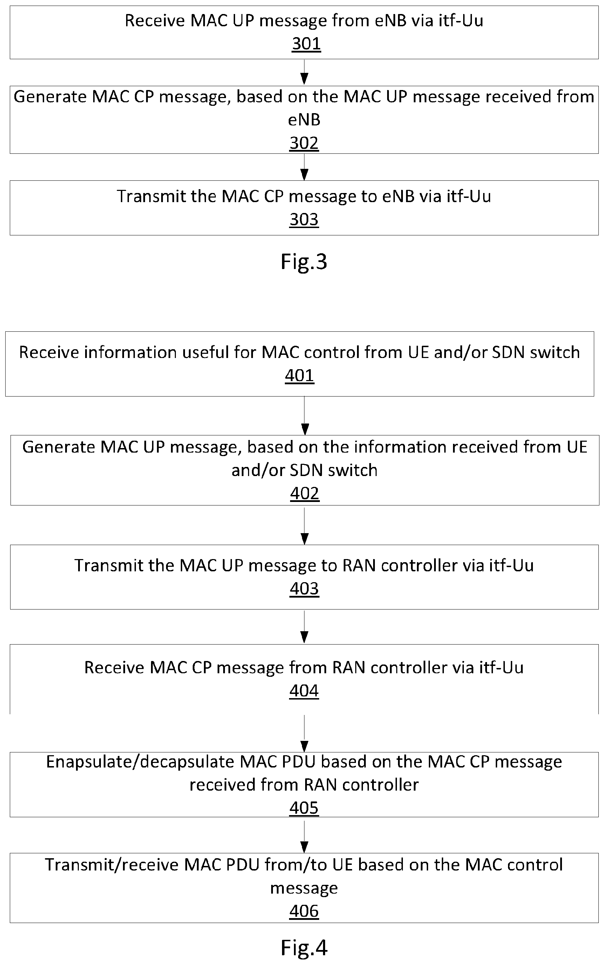

Figure 3 schematically illustrates a method of splitting the MAC control plane and user plane by the RAN controller 102, in accordance with various embodiments. In block 301, transceiver 202 or other devices may receive the MAC UP message from eNB 101 via itf-Uu, wherein the MAC UP message may be associated with the MAC PDUs to be transferred between the eNB 101 and the UE, the channel condition between the eNB 101 and the UE, and/or others. In block 302, the control plane 201 or other devices of RAN controller 102 may generate the MAC CP message based at least in part on the MAC UP message received from eNB 101, which may be associated with MAC layer multi-user scheduling, MAC layer multi-cell coordination, and/or others. In block 303, the transceiver 202 or other devices may transmit the MAC CP message to the eNB 101 via the itf-Uu.

Figure 4 schematically illustrates a method of splitting the MAC control plane and user plane by the eNB 101 (e.g., MeNB 101a, SeNB 101b, SeNB 101c), in accordance with various embodiments. In block 401, transceiver 206 or other devices of eNB 101 may receive information useful for the MAC control from an UE and/or SDN switch 103, where the information may be associated with PDUs to be transceived between the eNB 101 and the UE, the channel condition between the eNB 101 and the UE, and/or others. In block 402, user plane 205 or other devices of eNB 101 may generate a MAC UP message, based at least in part on the information received from the UE and/or SDN switch 103. In block 403, transceiver 206 or other devices of eNB 101 may transmit the MAC UP message to RAN controller 102 via itf-Uu.

In block 404, transceiver 206 or other devices of eNB 101 may receive a MAC CP message from RAN controller 102 via itf-Uu, wherein the MAC CP message may be associated with MAC layer multi-user scheduling and/or MAC layer multi-cell coordination. In block 405, user plane 205 or other devices of eNB 101 may encapsulate/decapsulate MAC PDU based least in part on the MAC CP message. In block 406, transceiver 206 or other devices of eNB 101 may transmit/receive the MAC PDUs to/from the UE, based at least in part on the MAC CP message.

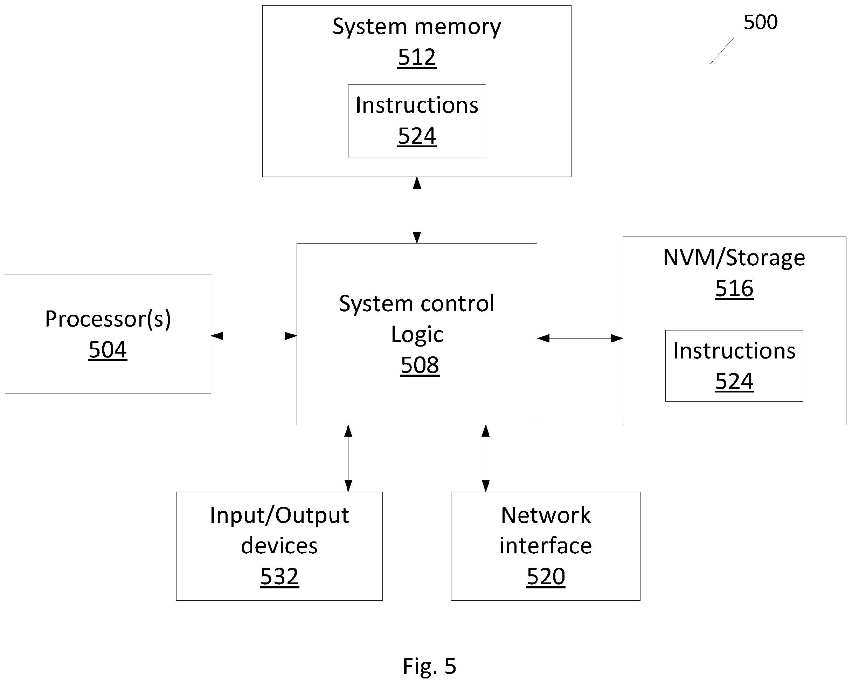

Figure 5 schematically illustrates an example system 500 in accordance with various embodiments. In an embodiment, the system 500 may comprise one or more processor(s) 504, system control logic 508 coupled with at least one of the processor(s) 504, system memory 512 coupled with system control logic 508, non-volatile memory (NVM)/storage 516 coupled with system control logic 508, and a network interface 520 coupled with system control logic 508.

Processor(s) 504 may include one or more single-core or multi-core processors. Processor(s) 504 may include any combination of general-purpose processors and dedicated processors (e.g., graphics processors, application processors, baseband processors, etc.). In an embodiment in which the system 500 implements eNB 101 or RAN controller 102, processors(s) 504 may be configured to execute one or more embodiment(s) as illustrated in Figures 1-4 in accordance with various embodiments.

System control logic 508 for one embodiment may include any suitable interface controllers to provide for any suitable interface to at least one of the processor(s) 504 and/or to any suitable device or component in communication with system control logic 508.

System control logic 508 for one embodiment may include one or more memory controller(s) to provide an interface to system memory 512. System memory 512 may be used to load and store data and/or instructions, for example, for system 500. System memory 512 for one embodiment may include any suitable volatile memory, such as suitable dynamic random access memory (DRAM), for example.

NVM/storage 516 may include one or more tangible, non-transitory computer-readable media used to store data and/or instructions, for example. NVM/storage 516 may include any suitable non-volatile memory, such as flash memory, for example, and/or may include any suitable non-volatile storage device(s), such as one or more hard disk drive(s) (HDD(s)), one or more compact disk (CD) drive(s), and/or one or more digital versatile disk (DVD) drive(s), for example.

The NVM/storage 516 may include a storage resource physically part of a device on which the system 500 is installed or it may be accessible by, but not necessarily a part of, the device. For example, the NVM/storage 516 may be accessed over a network via the network interface 520.

System memory 512 and NVM/storage 516 may respectively include, in particular, temporal and persistent copies of instructions 524. Instructions 524 may include instructions that when executed by at least one of the processor(s) 504 result in the system 500 implementing the method as described with reference to Figures 3-4. In various embodiments, instructions 524, or hardware, firmware, and/or software components thereof, may additionally/alternatively be located in the system control logic 508, the network interface 520, and/or the processor(s) 504.

Network interface 520 may include the transceiver 206 of eNB 101, the transceiver 202 of RAN controller 102, and/or others as illustrated in Figure 2, to provide a radio interface for system 500 to communicate over one or more network(s) and/or with any other suitable device (such as front end module, antenna, etc.). In various embodiments, the network interface 520 may be integrated with other components of system 500. For example, the network interface may include a processor of the processor(s) 504, memory of the system memory 512, NVM/Storage of NVM/Storage 516, and/or a firmware device (not being illustrated) having instructions that when executed by at least one of the processor(s) 504 result in the system 500 implement the method as described with reference to Figures 3-4.

Network interface 520 may further include any suitable hardware and/or firmware to provide a multiple input, multiple output radio interface. Network interface 520 for one embodiment may be, for example, a network adapter, a wireless network adapter, a telephone modem, and/or a wireless modem.

For one embodiment, at least one of the processor(s) 504 may be packaged together with logic for one or more controller(s) of system control logic 508. For one embodiment, at least one of the processor(s) 504 may be packaged together with logic for one or more controllers of system control logic 508 to form a System in Package (SiP). For one embodiment, at least one of the processor(s) 504 may be integrated on the same die with logic for one or more controller(s) of system control logic 508. For one embodiment, at least one of the processor(s) 504 may be integrated on the same die with logic for one or more controller(s) of system control logic 508 to form a System on Chip (SoC).

The system 500 may further include input/output (I/O) devices 532. The I/O devices 532 may include user interfaces designed to enable user interaction with the system 500, peripheral component interfaces designed to enable peripheral component interaction with the system 500, and/or sensors designed to determine environmental conditions and/or location information related to the system 500.

In various embodiments, the user interfaces could include, but are not limited to, a display (e.g., a liquid crystal display, a touch screen display, etc.), a speaker, a microphone, one or more cameras (e.g., a still camera and/or a video camera), a flashlight (e.g., a light emitting diode flash), and a keyboard.

In various embodiments, the peripheral component interfaces may include, but are not limited to, a non-volatile memory port, an audio jack, and a power supply interface.

In various embodiments, the sensors may include, but are not limited to, a gyro sensor, an accelerometer, a proximity sensor, an ambient light sensor, and a positioning unit. The positioning unit may also be part of, or interact with, the network interface 520 to communicate with components of a positioning network, e.g., a global positioning system (GPS) satellite.

In various embodiments, the system 500 may be eNB 101 or RAN controller 102. In various embodiments, system 500 may have more or less components, and/or different architectures.

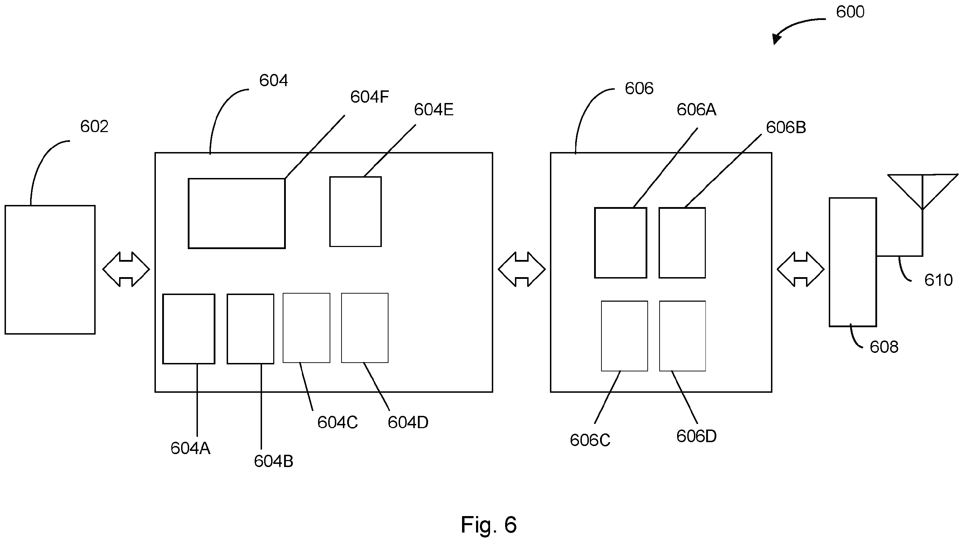

FIG. 6 illustrates, for one embodiment, example components of a UE device 600 in accordance with some embodiments. In some embodiments, the UE device 600 may include application circuitry 602, baseband circuitry 604, Radio Frequency (RF) circuitry 606, front-end module (FEM) circuitry 608, and one or more antennas 610, coupled together at least as shown. In some embodiments, the UE device 600 may include additional elements such as, for example, memory/storage, display, camera, sensor, and/or input/output (I/O) interface.

The application circuitry 602 may include one or more application processors. For example, the application circuitry 602 may include circuitry such as, but are not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 604 may include circuitry such as, but are not limited to, one or more single-core or multi-core processors. The baseband circuitry 604 may include one or more baseband processors and/or control logic to process baseband signals received from a receive signal path of the RF circuitry 606 and to generate baseband signals for a transmit signal path of the RF circuitry 606. Baseband processing circuity 604 may interface with the application circuitry 602 for generation and processing of the baseband signals and for controlling operations of the RF circuitry 606. For example, in some embodiments, the baseband circuitry 604 may include a second generation (2G) baseband processor 604a, third generation (3G) baseband processor 604b, fourth generation (4G) baseband processor 604c, and/or other baseband processor(s) 604d for other existing generations, generations in development or to be developed in the future (e.g., fifth generation (5G), 6G, etc.). The baseband circuitry 604 (e.g., one or more of baseband processors 604a-d) may handle various radio control functions that enable communication with one or more radio networks via the RF circuitry 606. The radio control functions may include, but are not limited to, signal modulation/demodulation, encoding/decoding, radio frequency shifting, etc. In some embodiments, modulation/demodulation circuitry of the baseband circuitry 604 may include Fast-Fourier Transform (FFT), precoding, and/or constellation mapping/demapping functionality. In some embodiments, encoding/decoding circuitry of the baseband circuitry 604 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 604 may include elements of a protocol stack such as, for example, elements of an EUTRAN protocol including, for example, physical (PHY), media access control (MAC), radio link control (RLC), packet data convergence protocol (PDCP), and/or RRC elements. A central processing unit (CPU) 604e of the baseband circuitry 604 may be configured to run elements of the protocol stack for signaling of the PHY, MAC, RLC, PDCP and/or RRC layers. In some embodiments, the baseband circuitry may include one or more audio digital signal processor(s) (DSP) 604f. The audio DSP(s) 604f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 604 and the application circuitry 602 may be implemented together such as, for example, on a system on a chip (SOC).

In some embodiments, the baseband circuitry 604 may provide for communication compatible with one or more radio technologies. For example, in some embodiments, the baseband circuitry 604 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 604 is configured to support radio communications of more than one wireless protocol may be referred to as multi-mode baseband circuitry.

RF circuitry 606 may enable communication with wireless networks using modulated electromagnetic radiation through a non-solid medium. In various embodiments, the RF circuitry 606 may include switches, filters, amplifiers, etc. to facilitate the communication with the wireless network. RF circuitry 606 may include a receive signal path which may include circuitry to down-convert RF signals received from the FEM circuitry 608 and provide baseband signals to the baseband circuitry 604. RF circuitry 606 may also include a transmit signal path which may include circuitry to up-convert baseband signals provided by the baseband circuitry 604 and provide RF output signals to the FEM circuitry 608 for transmission.

In some embodiments, the RF circuitry 606 may include a receive signal path and a transmit signal path. The receive signal path of the RF circuitry 606 may include mixer circuitry 606a, amplifier circuitry 606b and filter circuitry 606c. The transmit signal path of the RF circuitry 606 may include filter circuitry 606c and mixer circuitry 606a. RF circuitry 606 may also include synthesizer circuitry 606d for synthesizing a frequency for use by the mixer circuitry 606a of the receive signal path and the transmit signal path. In some embodiments, the mixer circuitry 606a of the receive signal path may be configured to down-convert RF signals received from the FEM circuitry 608 based on the synthesized frequency provided by synthesizer circuitry 606d. The amplifier circuitry 606b may be configured to amplify the down-converted signals and the filter circuitry 606c may be a low-pass filter (LPF) or band-pass filter (BPF) configured to remove unwanted signals from the down-converted signals to generate output baseband signals. Output baseband signals may be provided to the baseband circuitry 604 for further processing. In some embodiments, the output baseband signals may be zero-frequency baseband signals, although this is not a requirement. In some embodiments, mixer circuitry 606a of the receive signal path may comprise passive mixers, although the scope of the embodiments is not limited in this respect.

In some embodiments, the mixer circuitry 606a of the transmit signal path may be configured to up-convert input baseband signals based on the synthesized frequency provided by the synthesizer circuitry 606d to generate RF output signals for the FEM circuitry 608. The baseband signals may be provided by the baseband circuitry 604 and may be filtered by filter circuitry 606c. The filter circuitry 606c may include a low-pass filter (LPF), although the scope of the embodiments is not limited in this respect.

In some embodiments, the mixer circuitry 606a of the receive signal path and the mixer circuitry 606a of the transmit signal path may include two or more mixers and may be arranged for quadrature downconversion and/or upconversion respectively. In some embodiments, the mixer circuitry 606a of the receive signal path and the mixer circuitry 606a of the transmit signal path may include two or more mixers and may be arranged for image rejection (e.g., Hartley image rejection). In some embodiments, the mixer circuitry 606a of the receive signal path and the mixer circuitry 606a may be arranged for direct downconversion and/or direct upconversion, respectively. In some embodiments, the mixer circuitry 606a of the receive signal path and the mixer circuitry 606a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 606 may include analog-to-digital converter (ADC) and digital-to-analog converter (DAC) circuitry and the baseband circuitry 604 may include a digital baseband interface to communicate with the RF circuitry 606.

In some dual-mode embodiments, a separate radio IC circuitry may be provided for processing signals for each spectrum, although the scope of the embodiments is not limited in this respect.

In some embodiments, the synthesizer circuitry 606d may be a fractional-N synthesizer or a fractional N/N+1 synthesizer, although the scope of the embodiments is not limited in this respect as other types of frequency synthesizers may be suitable. For example, synthesizer circuitry 606d may be a delta-sigma synthesizer, a frequency multiplier, or a synthesizer comprising a phase-locked loop with a frequency divider.

The synthesizer circuitry 606d may be configured to synthesize an output frequency for use by the mixer circuitry 606a of the RF circuitry 606 based on a frequency input and a divider control input. In some embodiments, the synthesizer circuitry 606d may be a fractional N/N+1 synthesizer.

In some embodiments, frequency input may be provided by a voltage controlled oscillator (VCO), although that is not a requirement. Divider control input may be provided by either the baseband circuitry 604 or the applications processor 602 depending on the desired output frequency. In some embodiments, a divider control input (e.g., N) may be determined from a look-up table based on a channel indicated by the applications processor 602.

Synthesizer circuitry 606d of the RF circuitry 606 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 606d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 606 may include an IQ/polar converter.

FEM circuitry 608 may include a receive signal path which may include circuitry configured to operate on RF signals received from one or more antennas 1010, amplify the received signals and provide the amplified versions of the received signals to the RF circuitry 606 for further processing. FEM circuitry 608 may also include a transmit signal path which may include circuitry configured to amplify signals for transmission provided by the RF circuitry 606 for transmission by one or more of the one or more antennas 1010.

In some embodiments, the FEM circuitry 608 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 606). The transmit signal path of the FEM circuitry 608 may include a power amplifier (PA) to amplify input RF signals (e.g., provided by RF circuitry 606), and one or more filters to generate RF signals for subsequent transmission (e.g., by one or more of the one or more antennas 1010).

In some embodiments, the UE 600 comprises a plurality of power saving mechanisms. If the UE 600 is in an RRC_Connected state, where it is still connected to the eNB as it expects to receive traffic shortly, then it may enter a state known as Discontinuous Reception Mode (DRX) after a period of inactivity. During this state, the device may power down for brief intervals of time and thus save power.

If there is no data traffic activity for an extended period of time, then the UE 600 may transition off to an RRC Idle state, where it disconnects from the network and does not perform operations such as channel quality feedback, handover, etc. The UE 600 goes into a very low power state and it performs paging where again it periodically wakes up to listen to the network and then powers down again. The device cannot receive data in this state; in order to receive data, it transitions back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

## Claims

1. An apparatus of a radio access network, RAN, controller (102), comprising:
a processor (504); and
a device readable medium having instructions stored thereon that, when being executed by the one or more processors (504), cause the processor (504) to:
receive, from a base station (101), a media access control, MAC, user plane, UP, message via an interface (520), wherein the MAC UP message is associated with a MAC protocol data unit, PDU, to be transferred between the base station (101) and a user equipment, UE (600), or with a channel condition between the base station (101) and the UE (600), and wherein the MAC UP message comprises an interference over thermal, IOT, which indicates an uplink interference from a neighboring user equipment (600) in a neighboring cell;
generate a MAC control plane, CP, message, based at least in part on the MAC UP message, wherein the MAC CP message is associated with MAC layer multi-user scheduling or MAC layer multi-cell coordination; and
transmit the MAC CP message to the base station (101) via the interface (520).

2. The apparatus of claim 1, wherein the interface (520) is an interface Universal Mobile Telecommunications System Terrestrial Radio Access Network, UTRAN, UE, itf-Uu.

3. The apparatus of claim 1 or 2, wherein the MAC UP message comprises a downlink buffer state which indicates MAC PDUs to be transmitted from the base station (101) to the UE (600).

4. The apparatus of claim 3, wherein the downlink buffer state comprises at least one of an UE identify, a downlink buffer state report, DL BSR, list, DL BSR item information elements, IEs, a logical channel identifier, LCID, and a buffer size.

5. The apparatus of any one of claims 1-4, wherein the MAC CP MESSAGE comprises a sub-frame assembly having at least one of a control format indicator, a physical uplink shared channel, PUSCH, grant, a transmission power control, TPC, command, a physical downlink shared channel, PDSCH, assignment, or a random access response, RAR/paging control channel, PCCH/broadcast control channel, BCCH, transfer assignment information.

6. The apparatus of any one of claims 1-5, wherein the MAC UP message comprises at least one of a channel measurement result, an uplink MAC control element, CE; an acknowledgement/negative acknowledgement, ACK/NACK; or physical random access channel, PRACH, information.

7. The apparatus of any one of claims 1-6, wherein the MAC CP message associated with the MAC layer multi-user scheduling is further associated with an indication of the UE (600) to be scheduled in a current frame; radio resource assignment for the UE (600); and/or a link level parameter for the UE (600).

8. The apparatus of any one of claims 1-7, wherein the MAC CP message associated with the MAC layer multi-cell coordination is further associated with determination of a cell to provide a service; coordinated multi-point, CoMP, transmission/reception for the cell; and/or a carrier that the cell uses for the transmission/reception.

9. An apparatus for a base station (101), comprising:
control circuitry to generate a media access control, MAC, user plane, UP, message, wherein the MAC UP message is associated with a MAC protocol data unit, PDU, to be transferred between the base station (101) and a user equipment, UE (600), or with a channel condition between the base station (101) and the UE (600), and wherein the MAC UP message comprises an interference over thermal, IOT, which is to indicate an uplink interference from a neighboring user equipment (600) in a neighboring cell; and
a transceiver to transmit the MAC UP message to a radio access network, RAN, controller via an interface (520), and, to receive a MAC control plane, CP, message from the RAN controller (102) via the interface (520), wherein the MAC CP message is associated with MAC layer multi-user scheduling and/or MAC layer multi-cell coordination.

10. The apparatus of claim 9, wherein the control circuitry is further to encapsulate/decapsulate the MAC PDU, based at least in part on the MAC CP message; and the transceiver is further to transmit the MAC PDU to the UE (600), based at least in part on the MAC CP message.

11. The apparatus of claim 9 or 10, wherein the interface (520) is an interface Universal Mobile Telecommunications System Terrestrial Radio Access Network, UTRAN, UE, itf-Uu.

12. The apparatus of any one of claims 9 to 11, wherein the MAC UP MESSAGE comprises a downlink buffer state which is to indicate MAC PDUs to be transmitted from the base station (101) to the UE (600).

13. The apparatus of claim 12, wherein the downlink buffer state comprises at least one of an UE identify, a downlink buffer state report, DL BSR, list, DL BSR item information elements, IEs, a logical channel identifier, LCID, and a buffer size.

## Patentansprüche

1. Vorrichtung einer Funkzugangsnetzsteuereinheit, RAN-Steuereinheit, (102), die Folgendes umfasst:
einen Prozessor (504); und
ein vorrichtungslesbares Medium mit auf ihm gespeicherten Anweisungen, die dann, wenn sie durch den einen oder die mehreren Prozessoren (504) ausgeführt werden, bewirken, dass der Prozessor (504):
von einer Basisstation (101) eine Medienzugangssteueranwenderebenennachricht, MAC-UP-Nachricht, über eine Schnittstelle (520) empfängt, wobei die MAC-UP-Nachricht einer MAC-Protokolldateneinheit, MAC-PDU, die zwischen der Basisstation (101) und einem Anwendergerät, UE, (600) zu übertragen ist, oder einem Kanalzustand zwischen der Basisstation (101) und dem UE (600) zugeordnet ist und wobei die MAC-UP-Nachricht eine Störung über thermischem Rauschen, IOT, umfasst, die eine Aufwärtsstreckenstörung von einem benachbarten Anwendergerät (600) in einer benachbarten Zelle angibt;
eine MAC-Steuerebenennachricht, MAC-CP-Nachricht, zumindest teilweise anhand der MAC-UP-Nachricht erzeugt, wobei die MAC-CP-Nachricht einer MAC-Schicht-Mehrfachanwenderplanung oder einer MAC-Schicht-Mehrfachzellenkoordination zugeordnet ist; und
die MAC-CP-Nachricht an die Basisstation (101) über die Schnittstelle (520) sendet.

2. Vorrichtung nach Anspruch 1, wobei die Schnittstelle (520) eine Schnittstelle "Universal Mobile Telecommunications System Terrestrial Radio Access Network", UTRAN, UE, itf-Uu, ist.

3. Vorrichtung nach Anspruch 1 oder 2, wobei die MAC-UP-Nachricht einen Abwärtsstreckenzwischenspeicherzustand umfasst, der MAC-PDUs angibt, die von der Basisstation (101) an das UE (600) zu senden sind.

4. Vorrichtung nach Anspruch 3, wobei der Abwärtsstreckenzwischenspeicherzustand eine UE-Identität und/oder eine Abwärtsstreckenzwischenspeicherzustandsberichtsliste, DL-BSR-Liste, und/oder DL-BSR-Elementinformationselemente, DL-BSR-Element-IEs, und/oder eine logische Kanalkennung, LCID, und/oder eine Zwischenspeichergröße umfasst.

5. Vorrichtung nach einem der Ansprüche 1-4, wobei die MAC-CP-NACHRICHT eine Unterrahmenanordnung mit einem Steuerformatindikator und/oder einer Bewilligung eines physikalischen gemeinsam genutzten Aufwärtsstreckenkanals, PUSCH-Bewilligung, und/oder einem Übertragungsleistungssteuerbefehl, TPC-Befehl, und/oder einer Zuweisung eines physikalischen gemeinsam genutzten Abwärtsstreckenkanals, PDSCH-Zuweisung, und/oder Direktzugriffsantwort-/Pagingsteuerkanal-/Rundfunksteuerkanal-Übertragungszuweisungsinformationen, RAR-/PCCH-/BCCH-Übertragungszuweisungsinformationen umfasst.

6. Vorrichtung nach einem der Ansprüche 1-5, wobei die MAC-UP-Nachricht ein Kanalmessergebnis und/oder ein Aufwärtsstrecken-MAC-Steuerelement, Aufwärtsstrecken-MAC-CE, und/oder eine Bestätigung/negative Bestätigung, ACK/NACK, und/oder Informationen eines physikalischen Direktzugriffskanals, PRACH-Informationen, umfasst.

7. Vorrichtung nach einem der Ansprüche 1-6, wobei die MAC-CP-Nachricht, die der MAC-Schicht-Mehrfachanwenderplanung zugeordnet ist, ferner einer Angabe des UE (600), das in einem aktuellen Rahmen einzuplanen ist; einer Funkbetriebsmittelzuweisung für das UE (600) und/oder einem Verbindungsstufenparameter für das UE (600) zugeordnet ist.

8. Vorrichtung nach einem der Ansprüche 1-7, wobei die MAC-CP-Nachricht, die der MAC-Schicht-Mehrfachzellenkoordination zugeordnet ist, ferner der Bestimmung einer Zelle, um einen Dienst zu liefern; einer koordinierten Mehrpunktsendung/einem koordinierten Mehrpunktempfang für die Zelle bzw. CoMP-Sendung/Empfang für die Zelle und/oder einem Träger, den die Zelle für die Sendung/den Empfang verwendet, zugeordnet ist.

9. Vorrichtung für eine Basisstation (101), die Folgendes umfasst:
eine Steuerschaltung, um eine Medienzugangssteueranwenderebenennachricht, MAC-UP-Nachricht, zu erzeugen, wobei die MAC-UP-Nachricht einer MAC-Protokolldateneinheit, PDU, die zwischen der Basisstation (101) und einem Anwendergerät, UE, (600) zu übertragen ist, oder einem Kanalzustand zwischen der Basisstation (101) und dem UE (600) zugeordnet ist, und wobei die MAC-UP-Nachricht eine Störung über thermischem Rauschen, IOT, umfasst, die dazu dient, eine Aufwärtsstreckenstörung von einem benachbarten Anwendergerät (600) in einer benachbarten Zelle anzugeben; und
einen Sendeempfänger, um die MAC-UP-Nachricht an eine Funkzugangsnetzsteuereinheit, RAN-Steuereinheit, über eine Schnittstelle (520) zu senden und eine MAC-Steuerebenennachricht, MAC-CP-Nachricht, von der RAN-Steuereinheit (102) über die Schnittstelle (520) zu empfangen, wobei die MAC-CP-Nachricht einer MAC-Schicht-Mehrfachanwenderplanung und/oder einer MAC-Schicht-Mehrfachzellenkoordination zugeordnet ist.

10. Vorrichtung nach Anspruch 9, wobei die Steuerschaltung ferner dazu dient, die MAC-PDU zumindest teilweise anhand der MAC-CP-Nachricht einzukapseln/zu entkapseln; und der Sendeempfänger ferner dazu dient, die MAC-PDU an das UE (600) zumindest teilweise anhand der MAC-CP-Nachricht zu senden.

11. Vorrichtung nach Anspruch 9 oder 10, wobei die Schnittstelle (520) eine Schnittstelle "Universal Mobile Telecommunications System Terrestrial Radio Access Network", UTRAN, UE, itf-Uu, ist.

12. Vorrichtung nach einem der Ansprüche 9 bis 11, wobei die MAC-UP-NACHRICHT einen Abwärtsstreckenzwischenspeicherzustand umfasst, der MAC-PDUs angibt, die von der Basisstation (101) an das UE (600) zu senden sind.

13. Vorrichtung nach Anspruch 12, wobei der Abwärtsstreckenzwischenspeicherzustand eine UE-Identität und/oder eine Abwärtsstreckenzwischenspeicherzustandsbericht-Liste, DL-BSR-Liste, und/oder DL-BSR-Elementinformationselemente, DL-BSR-Element-IEs, und/oder eine logische Kanalkennung, LCID, und/oder eine Zwischenspeichergröße umfasst.

## Revendications

1. Appareil d'un contrôleur de réseau d'accès radio, RAN, (102), comprenant :
un processeur (504) ; et
un support lisible par dispositif ayant des instructions stockées sur celui-ci qui, lorsqu'elles sont exécutées par les un ou plusieurs processeurs (504), font en sorte que le processeur (504) :
reçoive, à partir d'une station de base (101), un message de plan utilisateur, UP, de contrôle d'accès au support, MAC, par l'intermédiaire d'une interface (520), dans lequel le message d'UP de MAC est associé à une unité de données de protocole, PDU, de MAC destinée à être transférée entre la station de base (101) et un équipement utilisateur, UE, (600), ou à une condition de canal entre la station de base (101) et l'UE (600), et dans lequel le message d'UP de MAC comprend un brouillage sur bruit thermique, IOT, qui indique un brouillage de liaison montante provenant d'un équipement utilisateur voisin (600) dans une cellule voisine ;
génère un message de plan de contrôle, CP, de MAC, sur la base au moins en partie du message d'UP de MAC, dans lequel le message de CP de MAC est associé à un ordonnancement multi-utilisateur de couche de MAC ou une coordination multi-cellule de couche de MAC ; et
transmette le message de CP de MAC à la station de base (101) par l'intermédiaire de l'interface (520).

2. Appareil selon la revendication 1, dans lequel l'interface (520) est une interface réseau d'accès radio terrestre de système universel de télécommunication avec les mobiles, UTRAN, UE, itf-Uu.

3. Appareil selon la revendication 1 ou 2, dans lequel le message d'UP de MAC comprend un état de mémoire tampon de liaison descendante qui indique des PDUs de MAC destinées à être transmises depuis la station de base (101) à l'UE (600) .

4. Appareil selon la revendication 3, dans lequel l'état de mémoire tampon de liaison descendante comprend au moins un d'une identification d'UE, d'un rapport d'état de mémoire tampon de liaison descendante, d'une liste de BSR de DL, d'éléments d'information, IEs, d'article de BSR de DL, d'un identifiant de canal logique, LCID, et d'une taille de mémoire tampon.

5. Appareil selon l'une quelconque des revendications 1 à 4, dans lequel le message de CP de MAC comprend un ensemble sous-trame ayant au moins un d'un indicateur de format de contrôle, d'une autorisation de canal partagé de liaison montante physique, PUSCH, d'une commande de contrôle de puissance de transmission, TPC, d'une attribution de canal partagé de liaison descendante physique, PDSCH, ou d'une information d'attribution de transfert de réponse d'accès aléatoire, RAR/canal de contrôle de radiomessagerie, PCCH/canal de contrôle de diffusion, BCCH.

6. Appareil selon l'une quelconque des revendications 1 à 5, dans lequel le message d'UP de MAC comprend au moins un d'un résultat de mesure de canal, d'un élément de contrôle de MAC de liaison montante, CE ; d'un accusé de réception/accusé de réception négatif, ACK/NACK ; ou d'une information de canal d'accès aléatoire physique, PRACH.

7. Appareil selon l'une quelconque des revendications 1 à 6, dans lequel le message de CP de MAC associé à l'ordonnancement multi-utilisateur de couche de MAC est en outre associé à une indication de l'UE (600) destiné à être ordonnancé dans une trame actuelle ; une attribution de ressources radio pour l'UE (600) ; et/ou un paramètre de niveau liaison pour l'UE (600) .

8. Appareil selon l'une quelconque des revendications 1 à 7, dans lequel le message de CP de MAC associé à la coordination multi-cellule de couche de MAC est en outre associé à la détermination d'une cellule pour fournir un service ; une transmission/réception multipoint coordonné, CoMP, pour la cellule ; et/ou une porteuse que la cellule utilise pour la transmission/réception.

9. Appareil pour une station de base (101), comprenant :
une circuiterie de contrôle pour générer un message de plan utilisateur, UP, de contrôle d'accès au support, MAC, dans lequel le message d'UP de MAC est associé à une unité de données de protocole, PDU, de MAC destinée à être transférée entre la station de base (101) et un équipement utilisateur, UE, (600), ou à une condition de canal entre la station de base (101) et l'UE (600), et dans lequel le message d'UP de MAC comprend un brouillage sur bruit thermique, IOT, qui est destiné à indiquer un brouillage de liaison montante provenant d'un équipement utilisateur voisin (600) dans une cellule voisine ; et
un transmetteur-récepteur pour transmettre le message d'UP de MAC à un contrôleur de réseau d'accès radio, RAN, par l'intermédiaire d'une interface (520), et, pour recevoir un message de plan de contrôle, CP, de MAC à partir du contrôleur de RAN (102) par l'intermédiaire de l'interface (520), dans lequel le message de CP de MAC est associé à un ordonnancement multi-utilisateur de couche de MAC et/ou une coordination multi-cellule de couche de MAC.

10. Appareil selon la revendication 9, dans lequel la circuiterie de contrôle est en outre destinée à encapsuler/décapsuler la PDU de MAC, sur la base au moins en partie du message de CP de MAC ; et le transmetteur-récepteur est en outre destiné à transmettre la PDU de MAC à l'UE (600), sur la base au moins en partie du message de CP de MAC.

11. Appareil selon la revendication 9 ou 10, dans lequel l'interface (520) est une interface réseau d'accès radio terrestre de système universel de télécommunication avec les mobiles, UTRAN, UE, itf-Uu.

12. Appareil selon l'une quelconque des revendications 9 à 11, dans lequel le message d'UP de MAC comprend un état de mémoire tampon de liaison descendante qui est destiné à indiquer des PDUs de MAC destinées à être transmises depuis la station de base (101) à l'UE (600) .

13. Appareil selon la revendication 12, dans lequel l'état de mémoire tampon de liaison descendante comprend au moins un d'une identification d'UE, d'un rapport d'état de mémoire tampon de liaison descendante, d'une liste de BSR de DL, d'éléments d'information, IEs, d'article de BSR de DL, d'un identifiant de canal logique, LCID, et d'une taille de mémoire tampon.
